# EUROPEAN PATENT APPLICATION

(11) **EP 4 848 661 A1**
(43) Date of publication of application: **02.12.2026**
(21) Application number: 26178643.8
(22) Date of filing: 13.05.2026
(51) Int. Cl.: H04L 9/40, G06F 21/57

(54) **THREAT INFRASTRUCTURE DISCOVERY**

(30) Priority: 30.05.2025 US 202519224039
(71) Applicant: Microsoft Technology Licensing, LLC, Redmond, WA 98052-6399 (US)
(72) Inventor: JAIKLA, Chayawan, Redmond, 98052-6399 (US); MAITRE, Matthieu, Redmond, 98052-6399 (US); RAKSHIT, Sudipto, Redmond, 98052-6399 (US); PON, Steven Alexander Daniel, Redmond, 98052-6399 (US)
(74) Representative: Page White Farrer

(57) **Abstract**

Systems, methods, and computer program products are disclosed for discovering threat infrastructure. An input network identifier is received, and a related network identifier is determined based on an attribute value associated with the input network identifier. A graph is generated based on the input network identifier and related network identifier. A cluster of nodes is determined based on a distance between a pair of nodes in the graph. A filtered cluster is determined based on a similarity to a node in the graph corresponding to a network identifier marked as suspicious. A network identifier not marked as suspicious that corresponds to an unmarked node of the filtered cluster is marked as suspicious based on a distance between the unmarked node and a marked node of the filtered cluster corresponding to a network identifier marked as suspicious. A responsive action is caused to be performed based on the marking.

## Description

### BACKGROUND

Threat infrastructure discovery refers to the process of identifying technical components, such as IP (Internet protocol) addresses, domains, and servers used by malicious entities to conduct attacks. In one aspect, threat infrastructure discovery involves collecting indicators of compromise (IOCs) and determining infrastructure related to the collected indicators. This process helps enhance security measures by monitoring or disabling hostile infrastructures.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Systems, methods, and computer program products are disclosed herein for threat infrastructure discovery. An input network identifier is received, and a related network identifier is determined. The input network identifier and related network identifier are used to generate a graph. A network identifier not marked as suspicious is marked as suspicious, the marking performed based on an analysis of the graph. A responsive action is caused, based on the marking, to be performed.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form a part of the specification, illustrate embodiments of the present application and, together with the description, further serve to explain the principles of the embodiments and to enable a person skilled in the pertinent art to make and use the embodiments.
FIG. 1 shows a block diagram of an example system for threat infrastructure discovery, in accordance with an embodiment.
FIG. 2 shows a block diagram of an example system for threat infrastructure discovery based on graph clustering, in accordance with an embodiment.
FIG. 3 shows a flowchart of an example process for threat infrastructure discovery based on a graph clustering, in accordance with an embodiment.
FIG. 4 shows a flowchart of an example process for determining, based on an attribute value associated with a network identifier, a related network identifier, in accordance with an embodiment.
FIG. 5 shows a flowchart of an example process for determining, based on an attribute value associated with a network identifier corresponding to a node connected by the edge, a weight of an edge of a graph, in accordance with an embodiment.
FIG. 6 depicts a flowchart of an example process for determining a node cluster in a graph, in accordance with an embodiment.
FIG. 7 shows a flowchart of an example process for determining a threat score for an unmarked node based on a number of nodes corresponding to any network identifier marked as suspicious that are connected to the unmarked node, in accordance with an embodiment.
FIG. 8 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Example Embodiments

Threat infrastructure discovery refers to the process of identifying technical components, such as internet protocol (IP) addresses, domains, and servers used by malicious entities to conduct attacks. This process may involve examining internet domains and/or IP addresses to identify an indicator of malicious activity and discover threat actor infrastructure. For instance, domain and IP analysis may include performing a lookup of WHOIS records to determine domain ownership, checking a domain name service (DNS) record to determine a historical domain name resolution, and/or correlating an IP address with known malicious behavior from a threat intelligence database. WHOIS records are accessed according to the WHOIS query and response protocol for querying databases that store an Internet resource's registered users and/or assignees. By uncovering relationships between network identifiers, a potential threat can be detected, blocked, and/or further investigated.

Conventional threat infrastructure discovery systems involve the application of a statically defined ruleset to a dataset to identify potential threat infrastructure. A statically defined ruleset specifies an attribute value (e.g., suspicious) associated with known threat infrastructure. The discovery of threat infrastructure based on a statically defined ruleset is limited in scope to components of an infrastructure that match the attribute value of the statically defined ruleset. Furthermore, a statically defined ruleset needs to be constantly updated to keep up with changes in the attribute values of the infrastructure associated with malicious entities.

The novel technology described herein overcomes these issues in conventional threat infrastructure discovery systems. Rather than employing a statically defined ruleset, the embodiments described herein dynamically detect a signature of a threat actor at runtime and use the signature to output threat infrastructure. In an aspect of this, a pivoting operation is performed on an input network identifier to determine a related network identifier, the pivoting operation performed based on an attribute value associated with the input network identifier. Such pivoting enables the discovery of a related network identifier frequently missed by a statically defined ruleset. Based on the input network identifier and the related network identifier, a graph of nodes (network identifiers) and at least one edge (relationship) is generated that may be queried to discover a potential threat.

In particular, clustering may be performed on the graph to discover potential threat infrastructure, the clustering performed based on a similarity to known threat infrastructure. The clustering generates clusters, the generating performed based on a level of overlap between at least one attribute value associated with a pair of nodes in the graph. The cluster is filtered and analyzed to determine a similarity between (A) an unmarked node in the cluster associated with a network identifier not marked as suspicious and (B) a marked node in the cluster associated with a network identifier marked as suspicious. Network identifiers marked as suspicious include malicious network identifiers and suspicious network identifiers. A malicious network identifier identifies threat infrastructure associated with a threat actor with a high confidence (e.g., > 90%). A suspicious network identifier identifies infrastructure associated with abnormal attributes and/or activity that indicates a likelihood that the infrastructure is associated with a threat actor or has been compromised by a threat actor. Additional analysis is sometimes performed to confirm that infrastructure identified by a suspicious network identifier is associated with and/or compromised by a threat actor. As such, this clustering enables the dynamic discovery of threat infrastructure, the discovery performed based on a similarity to a network identifier marked as suspicious that may be missed by statically defined rulesets. The network identifier associated with unmarked node may also be marked as suspicious, the marking performed based on a degree of similarity between the unmarked node and a marked node.

Implementations for these and further embodiments are described in further detail as follows.

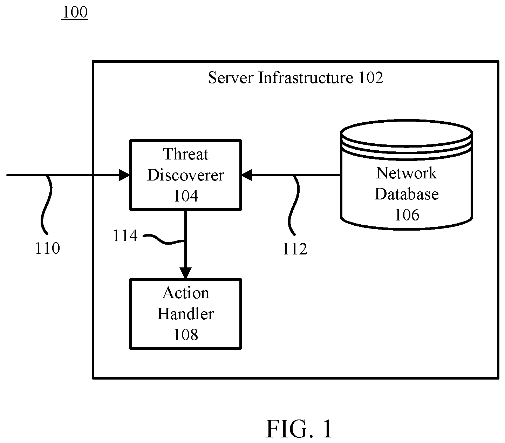

For example, FIG. 1 shows a block diagram of an example system 100 for threat infrastructure discovery, in accordance to an embodiment. As shown in FIG. 1, system 100 includes a server infrastructure 102 that comprises a threat discoverer 104, a network database 106, and an action handler 108. System 100 is described in detail as follows.

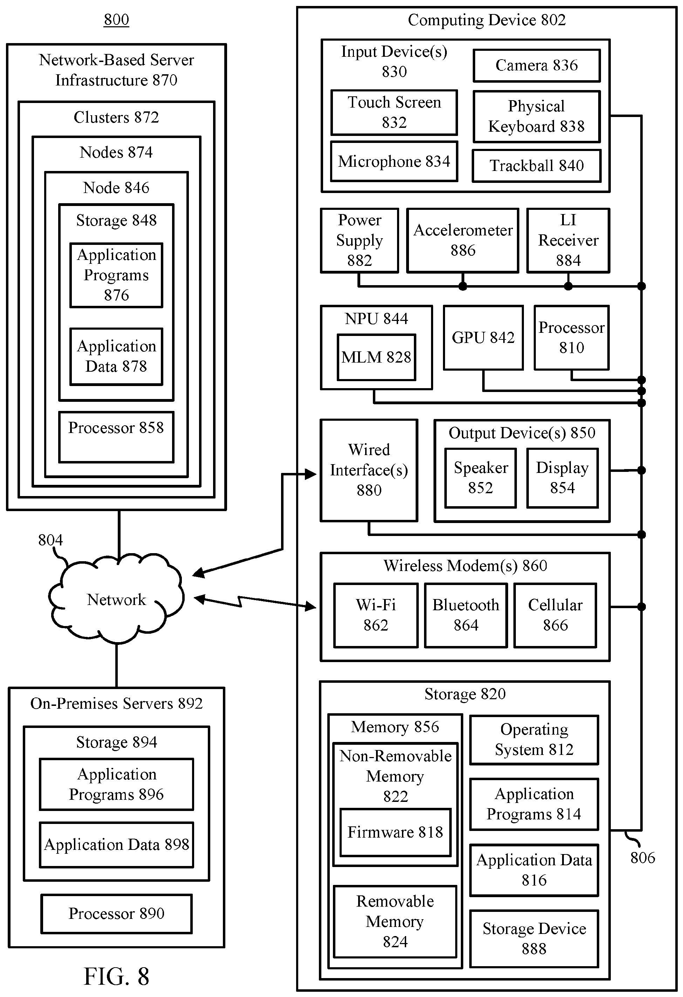

Server infrastructure 102 comprises a network-accessible server set (e.g., a cloud-based environment or platform). In an embodiment, the underlying resources of server infrastructure 102 are co-located (e.g., housed in one or more nearby buildings with associated components such as backup power supplies, redundant data communications, environmental controls, etc.) to form a datacenter, are distributed across different regions, and/or are arranged in other manners. Various example implementations of server infrastructure 102 are described below in reference to FIG. 8 (e.g., network-based server infrastructure 870, on-premises server 892, and/or components thereof).

Threat discoverer 104 receives input network identifier 110, and determines, based on network information 112 in network database 106, an output 114 comprising a related network identifier and an indication whether the related network identifier is marked as suspicious, or unmarked (e.g., benign, unknown, etc.). In embodiments, threat discoverer 104 performs a pivoting operation on an attribute value associated with input network identifier 110 to determine a related network identifier. Threat discoverer 104 generates a graph, the generating performed based on input network identifier 110 and the related network identifier. The generated graph provides a representation of a relationship between two related network identifiers. In the graph, at least a pair nodes correspond to input network identifier 110 and the related network identifier, and at least one edge indicates the relationship between the pair of nodes. The graph can include additional nodes corresponding to additional related network identifiers and/or additional edges connecting pairs of nodes in the graph that are related. A node in the graph is also associated and/or include (i.e., store) an attribute value associated with the corresponding network identifier. An edge in the graph connects a pair of nodes that correspond to a pair of network identifiers that have a threshold level of overlap in their associated attribute values (e.g., similar or identical secure sockets layer (SSL) certificates, similar or identical WHOIS contact information, etc.). An edge can be weighted to represent the level of overlap in at least one attribute value associated with the connected nodes and/or the distance between the connected nodes.

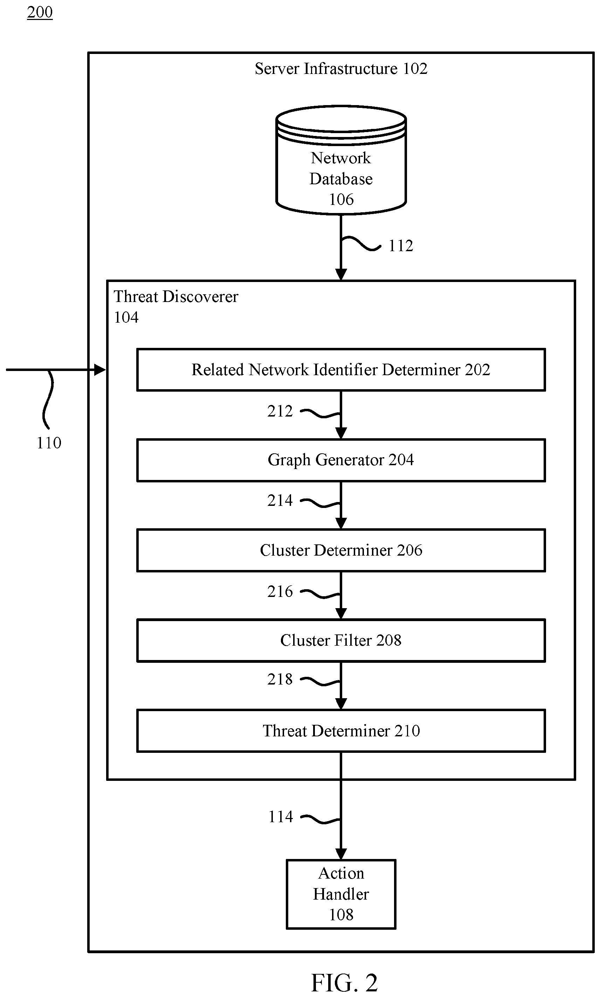

Threat discoverer 104 performs a clustering operation on the graph to determine a node cluster of related nodes, and filters the cluster to determine nodes in the graph that have a high level of overlap in their associated attribute values. As used herein, a node cluster is a grouping of one or more nodes. To determine a node cluster, a clustering operation performed based on a weight and/or a distance assigned to an edge connecting nodes in the graph to determine a grouping of nodes that are close together. The determined cluster is filtered to include a node corresponding to network identifier associated with attribute values that have a high level of overlap (e.g., 70% overlap) with at least one attribute value associated with an IOC (e.g., a node associated with network identifier marked as suspicious) in the cluster. Threat discoverer 104 analyzes the filtered cluster to determine a threat score for an unmarked node based on the number of IOCs connected to the unmarked, and/or the weight(s) (e.g., distance) of the edge connecting the unmarked node to the IOCs. Threat discoverer 104 marks the network identifier associated with the unmarked node that satisfies a similarity condition (e.g., threat score threshold). Threat discoverer 104 provides, as output 114, a network identifier associated with a node in the filtered cluster and an indication whether the network identifier is suspicious to action handler 108. Threat discoverer 104 will be described in greater detail below in conjunction with FIG. 2.

Network database 106 stores data related to a network identifier and/or an attribute value associated with the network identifier. In embodiments, network database 106 stores information gathered from the monitoring of network traffic on the Internet. For instance, network traffic traversing the Internet is analyzed (e.g., parsed) to determine a network identifier (e.g., IP address, hostname, domain, source address, destination address, etc.), and an attribute value associated with the network traffic (e.g., header field value, etc.). In an embodiment, network database 106 stores information gathered by probing (e.g., pinging, port scanning, etc.) a network node associated with a network identifier. In embodiments, network database 106 stores information determined from various datasets, such as, but not limited to, a WHOIS dataset, a passive domain name system (PDNS) dataset, an SSL certificate dataset, and the like. In embodiments, network database 106 is implemented as one or more databases, including, but not limited to, a local database, a database hosted on a server, a database hosted in the cloud, a relational database, and/or the like.

An attribute value associated with an IP address can include any information associated with an IP address. Examples of an attribute value associated with an IP address includes a title of a response (e.g., webpage), a status line, a status line of a particular port, a response hash value, a response header length, a response header hash value, an error hash value, a banner hash value, a hash of Hypertext Transfer Protocol (HTTP) header keys, a content length difference of responses over time, an SSL certificate hash value, an SSL certificate subject value, an SSL certificate organization, an SSL certificate issuer, whether the SSL certificate was self-signed, an SSL certificate alternate name prefix, an SSL certificate alternate name, an SSL certificate validity period, whether the SSL certificate is expired, a country, a hosting provider, an open port, an autonomous system number, an IP block, a transport layer security (TLS) server fingerprint hash, a secure shell (SSH) server public key, a top-level domain (TLD) of a resolving domain, a server version, a port server version, an IP block organization, a resolving domain, a web component name, a web component type, a web component version, any combination thereof, and/or a hash value of any combination thereof. In embodiments, an attribute value associated with an IP address includes an attribute value observed (e.g., in network traffic) in association with the IP address over a period of time (e.g., previous 7 days).

An attribute value associated with a domain can include any information associated with a domain. Examples of an attribute value associated with a domain includes a resolving IP address, a header name and value, a parent host, a parent domain, a child host, a child domain, an SSL certificate hash value, an SSL certificate subject value, an SSL certificate organization, an SSL certificate issuer, whether the SSL certificate was self-signed, an SSL certificate alternate name prefix, an SSL certificate alternate name, a hash value of the SSL certificate alternate name, an SSL certificate validity period, whether the SSL certificate is expired, WHOIS contact information (e.g., registrant email, admin email, technical email, etc.), WHOIS contact information domain, WHOIS name information (e.g., registrant name, admin name, technical name, etc.), WHOIS organization information (e.g., registrant organization, admin organization, technical organization, etc.), a name server domain, a domain status, a hosting provider, a web component name, a web component type, a web component version, a cookie name, a canonical name (CNAME), a CNAME domain, an open port, an autonomous system number, an IP block, a host prefix, a country code, any combination thereof, and/or a hash value of any combination thereof. In embodiments, an attribute value associated with a domain (e.g., domain name, host name, etc.) includes an attribute value observed (e.g., in network traffic, in a WHOIS dataset, etc.) in association with the domain over a period of time (e.g., previous 7 days).

Action handler 108 causes, based on output 114 received from threat discoverer 104, the performance of a responsive action. In embodiments, action handler 108 monitors, based on a network identifier marked as suspicious, network traffic; further investigates network traffic associated with a network identifier marked as suspicious; provides, based on network traffic associated with a network identifier marked as suspicious, an alert; blocks network traffic associated with a network identifier marked as suspicious; and/or updates, based on a network identifier marked as suspicious, network database 106. In configurations, action handler 108 causes, based on whether the network identifier is marked as suspicious, the performance of a responsive action automatically and/or semi-automatically (e.g., with approval of a user). For instance, action handler 108 automatically blocks and/or prompts a user to block network traffic associated with a network identifier marked as suspicious.

Embodiments described herein may operate in various ways to discover threat infrastructure based on node clusters. For instance, FIG. 2 shows a block diagram of an example system 200 for threat infrastructure discovery based on a graphed node cluster, in accordance with an embodiment. As shown in FIG. 2, system 200 includes server infrastructure 102, threat discoverer 104, network database 106, and action handler 108. In system 200, threat discoverer 104 further includes a related network identifier determiner 202, a graph generator 204, a cluster determiner 206, a cluster filter 208, and a threat determiner 210. System 200 is described in further detail as follows.

Related network identifier determiner 202 receives input network identifier 110 and determines a related network identifier 212. In embodiments, related network identifier determiner 202 performs a pivoting operation to discover related network identifier 212, the pivoting operation performed based on an attribute value associated with input network identifier 110 and network information 112. Related network identifier determiner 202 analyzes at least one attribute value associated with input network identifier 110 to determine, based on network information 112, an attribute value that is shared by less than a predetermined number (e.g., 100 or less, etc.) of network identifiers. Related network identifier determiner 202 performs a pivoting operation, the pivoting operation performed based on the attribute value that is shared by less than a predetermined number of network identifiers to determine related network identifier 212 that shares the attribute value that is shared by less than a predetermined number of network identifiers. A related network identifier is a representation of a piece of infrastructure that shares an attribute value with another network identifier. Examples of a related network identifier include an IP address, a hostname, or a domain that shares an attribute value (e.g., secure socket layer (SSL) certificate hash, WHOIS registrant, etc.) with another network identifier. Related network identifier determiner 202 provides network identifier 212 to graph generator 204.

Graph generator 204 generates a graph 214, the generating performed based on input network identifier 110, related network identifier 212, and network information 112. In embodiments, graph generator 204 includes, in graph 214, nodes corresponding to input network identifier 110 and related network identifier 212, and at least one edge connecting a pair of nodes of graph 214 that are related. Graph generator 204 performs pairwise comparison of a pair of nodes of graph 214 to determine a number of attribute values shared by the compared nodes and/or a type of attribute value shared by the compared nodes to determine whether the compared nodes are related. For instance, a pair of nodes corresponding to a pair of network identifiers that share an attribute value that is associated with fewer than a predetermined number (e.g., 100 or less) of network identifiers across the Internet are considered related. Graph generator 204 generates a weight (e.g., distance) for an edge of graph 214, the generating performed based on a degree of similarity between a pair of nodes connected by the edge. For instance, graph generator 204 determines a weight for the edge connecting pair of nodes, the determining performed based on various factors, such as, but not limited to, a number of attribute values shared by a pair of network identifiers associated with the pair of connected nodes, a type of attribute value shared by the pair of network identifiers associated with the pair of connected nodes, and/or a proportion (e.g., percentage, weighted percentage) of attribute values shared by the pair of network identifiers corresponding to the pair of connected nodes. An edge is assigned a higher weight (e.g., shorter distance) when pair of network identifiers associated with the pair of connected nodes share a higher number of attribute values, and vice versa.

In embodiments, graph generator 204 determines whether graph 214 satisfies a risk condition that requires further analysis of graph 214. The risk condition is a threshold condition indicating that graph 214 contains a level of indicators of compromise to warrant further investigation. In configurations, the risk threshold is determined by a subject matter expert to balance an accuracy of threat infrastructure discover and resource costs. For instance, graph generator 204 determines whether a proportion (e.g., percentage) of nodes in graph 214 that are marked as suspicious satisfies a risk condition (e.g., percentage threshold). In embodiments, when the proportion of nodes in graph 214 exceeds a predetermined threshold (e.g., 1%, 2%, etc.), graph generator 204 provides graph 214 to cluster determiner 206 for further analysis.

Cluster determiner 206 determines a node cluster 216 of a group of nodes of graph 214, the determining performed based on a weight (e.g., distance) assigned to an edge of graph 214. In embodiments, cluster determiner 206 determines node cluster 216 using various community clustering algorithms, such as, but not limited to, the Louvain algorithm, the Girvan-Newman algorithm, the Label Propagation algorithm, the Infomap algorithm, and the like. The Louvain algorithm initially assigns each node to its own community, then the algorithm iteratively merges nodes and communities to maximize modularity. Once no further improvements can be made, it aggregates the nodes in each community into a single node and repeats the process in a hierarchical manner. The Girvan-Newman algorithm determines edge betweenness that measures the number of shortest paths that pass through an edge, and progressively removes edges with the highest edge betweenness until the network breaks down into individual communities. The Label Propagation algorithm initially assigns nodes unique labels, and then iteratively updates the labels of nodes to the most frequent label among their neighbors until the labels converge. The Infomap algorithm treats the graph as a map and seeks to find the most efficient way to describe the path of a random walker. By doing so, the Infomap algorithm identifies clusters of nodes that the walker tends to visit more frequently. Cluster determiner 206 provides node cluster 216 to cluster filter 208.

Cluster filter 208 filters node cluster 216 to generate filtered cluster 218, the filtering performed based on a level of overlap of at least one attribute value associated with first network identifier associated with an unmarked node of node cluster 216 that is not marked as suspicious and a second network identifier associated with a marked node of node cluster 216 that is marked as suspicious. For instance, cluster filter 208 includes, in filtered cluster 218, a node associated with an attribute value (e.g., SSL certificate, WHOIS contact information, etc.) that has a significant level of overlap (e.g., 70% overlap) with an attribute value associated with an IOC. The level of overlap is determined by comparing at least one attribute value between a pair of nodes to determine the proportion of the compared attribute values that are identical between the pair of nodes. In embodiments, cluster filter 208 performs a pairwise comparison of a marked node of node cluster 216 associated with a network identifier marked as suspicious and an unmarked node of node cluster 216 associated with a network identifier not marked as suspicious to determine a proportion of the compared attribute values shared by the compared nodes. Cluster filter 208 includes, in filtered cluster 218, a node of node cluster 216 that shares at least a predetermined proportion (e.g., 70% or more) of attribute values with a node of node cluster 216 associated with a network identifier marked as suspicious. Cluster filter 208 provides filtered cluster 218 to threat determiner 210.

Threat determiner 210 analyzes filtered cluster 218 to determine whether a network identifier associated with a node of filtered cluster 218 not already marked as suspicious should be marked as suspicious. In embodiments, threat determiner 210 determines, based on filtered cluster 218, threat scores for a network identifier associated with a node of filtered cluster 218 not already marked as suspicious. The threat score for a node of filtered cluster 218 is determined in various ways, such as, but not limited to, based on the number of connected nodes that are associated with any network identifier marked as suspicious, and/or the weight (e.g., distance) of the edge connecting the node to a marked node that is associated with a network identifier marked as suspicious. A higher threat score indicates a higher likelihood that the network identifier associated with the node is suspicious, and vice versa. In a configuration, a network identifier associated with a particular node is marked as suspicious if the threat score assigned to the particular node satisfies a first threat score condition (e.g., first threshold). Threat determiner 210 provides, as output 114, the network identifier associated with the node of filtered cluster 218 and an indication of whether the network identifier associated with the node of filtered cluster 218 is marked as suspicious, or unmarked (e.g., benign, unknown, etc.).

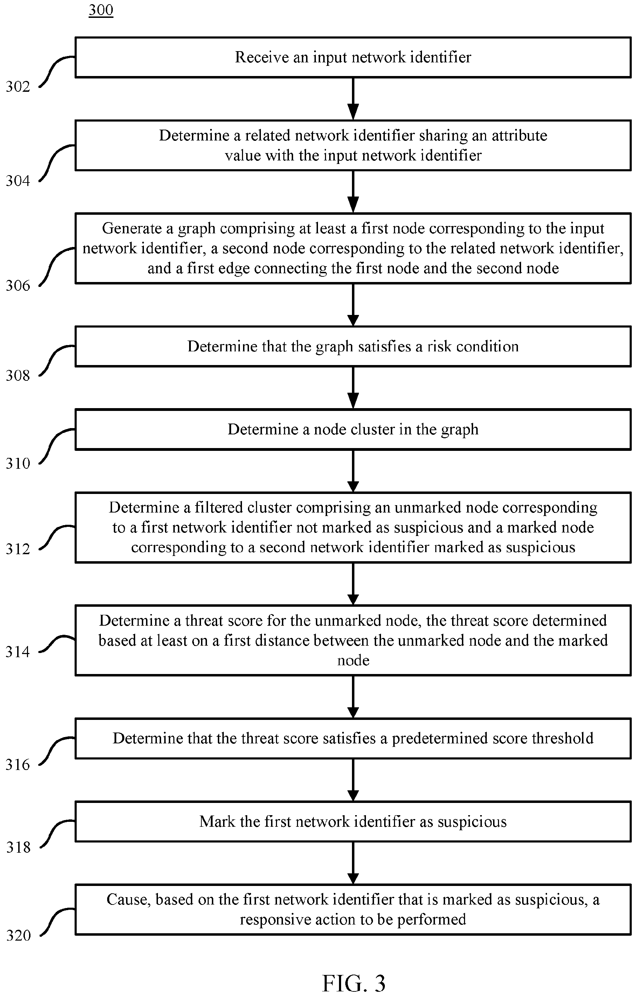

Embodiments described herein may operate in various ways to discover threat infrastructure, the discovering performed based on a node cluster in a graph. For instance, FIG. 3 depicts a flowchart 300 of a process for threat infrastructure discovery based on a graphed node cluster, in accordance with an embodiment. In embodiments, server infrastructure 102, and/or threat discoverer 104 may, for example, operate according to flowchart 300. Note that not all steps of flowchart 300 may need to be performed in all embodiments, and in some embodiments, the steps of flowchart 300 may be performed in different orders than shown. Flowchart 300 is described as follows with respect to FIGS. 1 and 2 for illustrative purposes.

Flowchart 300 starts at step 302. In step 302, an input network identifier is received. For instance, related network identifier determiner 202 receives input network identifier 110. In embodiments, related network identifier determiner 202 determines, based on network information 112 accessed from network database 106, an attribute value associated with input network identifier 110.

In step 304, a related network identifier sharing an attribute value with the input network identifier is determined. For instance, related network identifier determiner 202 performs a pivoting operation to discover related network identifier 212, the pivoting operation performed based on an attribute value associated with input network identifier 110 and network information 112. Related network identifier determiner 202 provides related network identifier 212 to graph generator 204.

In step 306, a graph is generated, the graph comprising at least a first node corresponding to the input network identifier, a second node corresponding to the related network identifier, and an edge connecting a pair of nodes of the graph that are related. For instance, graph generator 204 generates graph 214 comprising at least a first node corresponding to input network identifier 110, a second node corresponding to related network identifier 212, and an edge connecting the first node and the second node. In embodiments, graph 214 includes additional nodes corresponding to additional network identifiers 212 related to input network identifier 110, and/or additional edges connecting pairs of nodes of graph 214 that are related. Graph generator 204 performs a pairwise comparison of a pair of nodes of graph 214 to determine a number of attribute values shared by the compared nodes and/or a type of attribute value shared by the compared nodes to determine whether the compared nodes are related.

In step 308, it is determined that the graph satisfies a risk condition. For instance, graph generator 204 determines whether a proportion (e.g., percentage) of nodes in graph 214 that are marked as suspicious satisfies a risk condition (e.g., percentage threshold). In embodiments, when the proportion of nodes in graph 214 exceeds a predetermined threshold (e.g., 1%, 2%, etc.), graph generator 204 provides graph 214 to cluster determiner 206 for further analysis to determine whether unknown threat infrastructure (e.g., network identifier associated with a node) is present in graph 214.

In step 310, a node cluster in the graph is determined. For instance, cluster determiner 206 determines a node cluster 216 of a group of nodes of graph 214, the determining performed based on the a weight (e.g., distance) assigned to an edge of graph 214 using a community clustering algorithm, such as, but not limited to, the Louvain algorithm, the Girvan-Newman algorithm, the Label Propagation algorithm, the Infomap algorithm, and/or the like. Cluster determiner 206 provides node cluster 216 to cluster filter 208.

In step 312, a filtered cluster is determined, the filtered cluster comprising an unmarked node corresponding to a first network identifier not marked as suspicious and a marked node corresponding to a second network identifier marked as suspicious. For instance, cluster filter 208 performs a pairwise comparison of a marked node of node cluster 216 associated with a first network identifier marked as suspicious and an unmarked node of node cluster 216 associated with a second network identifier not marked as suspicious to determine a proportion of at least one compared attribute value sharing the same attribute value. Cluster filter 208 includes, in filtered cluster 218, any node of node cluster 216 that shares at least a predetermined proportion (e.g., 70% or more) of attribute values with any node of node cluster 216 associated with a network identifier marked as suspicious. Cluster filter 208 provides filtered cluster 218 to threat determiner 210.

In step 314, a threat score for the unmarked node is determined, the determining performed based at least on a distance between the unmarked node and the marked node. For instance, threat determiner 210 determines a threat score for a network identifier associated with an unmarked node of filtered cluster 218 not already marked as suspicious, the determining performed based at least on a weight (e.g., distance) of an edge connecting the unmarked node to a marked node of filtered cluster 218 that is associated with a network identifier marked as suspicious.

In step 316, it is determined that the threat score satisfies a predetermined score threshold. For instance, threat determiner 210 determines that the determined threat score satisfies (e.g., greater than or equal to) a predetermined score threshold.

In step 318, the first network identifier is marked as suspicious. For instance, threat determiner 210 marks the first network identifier associated with the unmarked node as suspicious when the threat score satisfies (e.g., greater than) a predetermined score threshold. In embodiments, a network identifier associated with an unmarked node is marked as suspicious if the threat score assigned to the particular node satisfies a first threat score condition (e.g., first threshold). Threat determiner 210 provides, as output 114, the network identifier associated with a node of filtered cluster 218 and an indication of whether the network identifier is marked as suspicious, or unmarked (e.g., benign, unknown, etc.).

In step 320, a responsive action is caused to be performed, the causing performed based on the first network identifier that is marked as suspicious. For instance, action handler 108 causes, based on a network identifier in output 114 being marked as suspicious, a responsive action to be performed. In embodiments, action handler 108 causes the performance a responsive action automatically (e.g., without human intervention), and/or semi-automatically (e.g., with approval of a user) when the network identifier is marked as suspicious. A responsive action caused by action handler 108 include, for example, monitoring, based on a network identifier marked as suspicious, network traffic; further investigating network traffic associated with a network identifier marked as suspicious; providing, based on network traffic associated with a network identifier marked as suspicious, an alert; blocking network traffic associated with a network identifier marked as suspicious; and/or updating, based on a network identifier marked as suspicious, network database 106.

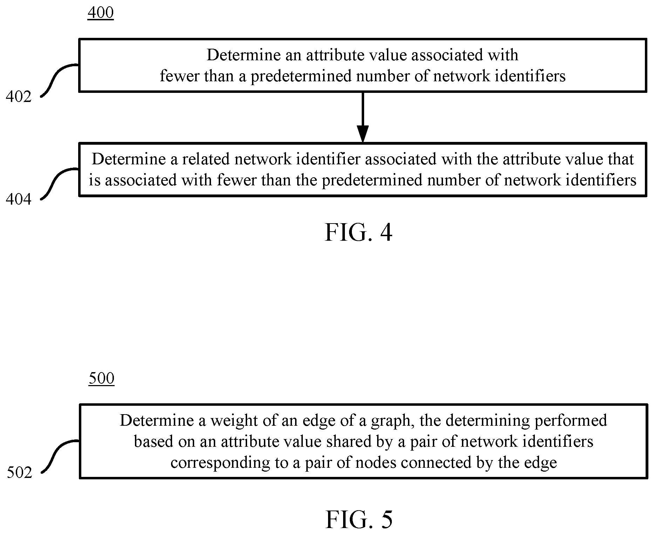

Embodiments described herein may operate in various ways to determine a related network identifier, the determining performed based on an attribute value associated with a network identifier. For instance, FIG. 4 depicts a flowchart 400 of a process for determining, based on an attribute value associated with the network identifier, a related network identifier, in accordance with an embodiment. In embodiments, server infrastructure 102, threat discoverer 104, and/or related network identifier determiner 202 may, for example, operate according to flowchart 400. Flowchart 400 is described as follows with respect to FIGS. 1 and 2 for illustrative purposes.

Flowchart 400 starts at step 402. In step 402, an attribute value associated with fewer than a predetermined number of network identifiers is determined. For instance, related network identifier determiner 202 analyzes an attribute value associated with input network identifier 110 to determine, based on network information 112, an attribute value that is shared by less than a predetermined number (e.g., 100 or less, etc.) of network identifiers.

In step 404, a related network identifier associated with the attribute value associated with fewer than the predetermined number of network identifiers is determined. For instance, related network identifier determiner 202 performs a pivoting operation to determine related network identifier 212, the pivoting operation performed based on the attribute value associated with fewer than a predetermined number of network identifiers that shares the attribute value associated with fewer than the predetermined number of network identifiers.

Embodiments described herein may operate in various ways to determine a weight of an edge of a graph, the determining performed based on an attribute value associated with a pair of network identifiers associated with a pair of nodes connected by the edge. For instance, FIG. 5 depicts a flowchart 500 of a process for determining, based on an attribute value associated with a pair of network identifiers associated with a pair of nodes connected by the edge, a weight of an edge of a graph, in accordance with an embodiment. In embodiments, server infrastructure 102, threat discoverer 104, and/or graph generator 204 may, for example, operate according to flowchart 500. Flowchart 500 is described as follows with respect to FIGS. 1 and 2 for illustrative purposes.

Flowchart 500 starts at step 502. In step 502, a weight of an edge connecting a pair of nodes of a graph is determined, the determining performed based on an attribute value shared by a pair of network identifiers corresponding to a pair of nodes connected by the edge. For instance, graph generator 204 determines a weight for the edge, the determining performed based on a number of at least one attribute value shared by a pair of network identifiers associated with a pair of connected nodes, a type of attribute value shared by the pair of network identifiers associated with the pair of connected nodes, and/or a proportion (e.g., percentage, weighted percentage) of at least one attribute value shared by the pair of network identifiers. An edge is assigned a higher weight (e.g., shorter distance) when the pair of network identifiers associated with the pair of nodes connected by the edge share a higher number of attribute values, and vice versa.

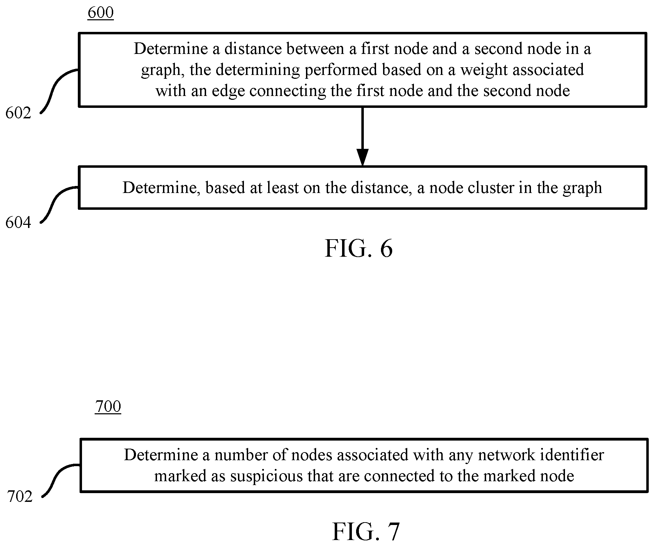

Embodiments described herein may operate in various ways to determine a node cluster in a graph. For instance, FIG. 6 depicts a flowchart 600 of a process for determining a node cluster in a graph, in accordance with an embodiment. In embodiments, server infrastructure 102, threat discoverer 104, and/or cluster determiner 206 may, for example, operate according to flowchart 600. Flowchart 600 is described as follows with respect to FIGS. 1 and 2 for illustrative purposes.

Flowchart 600 starts at step 602. In step 602, a distance between a first node and a second node in a graph is determined, the determining performed based on a weight associated with an edge connecting the first node and the second node. For instance, cluster determiner 206 determines a distance between a pair of nodes of graph 214, the determining performed based on a weight assigned to the edge of graph 214 connecting the pair of nodes.

In step 604, a node cluster in the graph is determined based on the distance. For instance, cluster determiner 206 determines, based on the determined distance (e.g., edge weight), node cluster 216 using a community clustering algorithm, such as, but not limited to, the Louvain algorithm, the Girvan-Newman algorithm, the Label Propagation algorithm, the Infomap algorithm, and the like.

Embodiments described herein may operate in various ways to determine a threat score for an unmarked node, the determining based on a number of nodes corresponding to any network identifier marked as suspicious that are connected to the unmarked node. For instance, FIG. 7 depicts a flowchart 700 of a process for determining a threat score for an unmarked node based on a number of nodes corresponding to any network identifier marked as suspicious that are connected to the unmarked node, in accordance with an embodiment. In embodiments, server infrastructure 102, threat discoverer 104, and/or threat determiner 210 may, for example, operate according to flowchart 700. Flowchart 700 is described as follows with respect to FIGS. 1 and 2 for illustrative purposes.

Flowchart 700 starts at step 702. In step 702, a number of nodes associated with any network identifier marked as suspicious that are connected to the marked node is determined. For instance, threat determiner 210 determines a threat score for a network identifier not marked as suspicious, the determining performed based on a number of nodes connected to the marked node that are associated with any network identifier marked as suspicious.

### III. Example Mobile Device and Computer System Implementation

Server infrastructure 102, threat discoverer 104, network database 106, action handler 108, related network identifier determiner 202, graph generator 204, cluster determiner 206, cluster filter 208, threat determiner 210, and/or the components described therein, and/or the steps of flowcharts 300, 400, 500, 600, and/or 700 are implemented in hardware, or hardware combined with one or both of software and/or firmware. For example, threat discoverer 104, network database 106, action handler 108, related network identifier determiner 202, graph generator 204, cluster determiner 206, cluster filter 208, threat determiner 210, and/or the components described therein, and/or the steps of flowcharts 300, 400, 500, 600, and/or 700 are each implemented as computer program code/instructions configured to be executed in one or more processors and stored in a computer readable storage medium. Alternatively, server infrastructure 102, threat discoverer 104, network database 106, action handler 108, related network identifier determiner 202, graph generator 204, cluster determiner 206, cluster filter 208, threat determiner 210, and/or the components described therein, and/or the steps of flowcharts 300, 400, 500, 600, and/or 700 are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 8. FIG. 8 shows a block diagram of an exemplary computing environment 800 that includes a computing device 802. Computing device 802 is an example of server infrastructure 102, which each include one or more of the components of computing device 802. In some embodiments, computing device 802 is communicatively coupled with devices (not shown in FIG. 8) external to computing environment 800 via network 804. Network 804 comprises one or more networks such as local area networks (LANs), wide area networks (WANs), enterprise networks, the Internet, etc. In examples, network 804 includes one or more wired and/or wireless portions. In some examples, network 804 additionally or alternatively includes a cellular network for cellular communications. Computing device 802 is described in detail as follows.

Computing device 802 can be any of a variety of types of computing devices. Examples of computing device 802 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 802 is a stationary computing device such as a desktop computer, a personal computer (PC), a stationary server device, a minicomputer, a mainframe, a supercomputer, etc.

As shown in FIG. 8, computing device 802 includes a variety of hardware and software components, including a processor 810, a storage 820, a graphics processing unit (GPU) 842, a neural processing unit (NPU) 844, one or more input devices 830, one or more output devices 850, one or more wireless modems 860, one or more wired interfaces 880, a power supply 882, a location information (LI) receiver 884, and an accelerometer 886. Storage 820 includes memory 856, which includes non-removable memory 822 and removable memory 824, and a storage device 888. Storage 820 also stores an operating system 812, application programs 814, and application data 816. Wireless modem(s) 860 include a Wi-Fi modem 862, a Bluetooth modem 864, and a cellular modem 866. Output device(s) 850 includes a speaker 852 and a display 854. Input device(s) 830 includes a touch screen 832, a microphone 834, a camera 836, a physical keyboard 838, and a trackball 840. Not all components of computing device 802 shown in FIG. 8 are present in all embodiments, additional components not shown may be present, and in a particular embodiment any combination of the components are present. In examples, components of computing device 802 are mounted to a circuit card (e.g., a motherboard) of computing device 802, integrated in a housing of computing device 802, or otherwise included in computing device 802. The components of computing device 802 are described as follows.

In embodiments, a single processor 810 (e.g., central processing unit (CPU), microcontroller, a microprocessor, signal processor, ASIC (application specific integrated circuit), and/or other physical hardware processor circuit) or multiple processors 810 are present in computing device 802 for performing such tasks as program execution, signal coding, data processing, input/output processing, power control, and/or other functions. In examples, processor 810 is a single-core or multi-core processor, and each processor core is single-threaded or multithreaded (to provide multiple threads of execution concurrently). Processor 810 is configured to execute program code stored in a computer readable medium, such as program code of operating system 812 and application programs 814 stored in storage 820. The program code is structured to cause processor 810 to perform operations, including the processes/methods disclosed herein. Operating system 812 controls the allocation and usage of the components of computing device 802 and provides support for one or more application programs 814 (also referred to as "applications" or "apps"). In examples, application programs 814 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 810 includes one or more general processors (e.g., CPUs) configured with or coupled to one or more hardware accelerators, such as one or more NPUs 844 and/or one or more GPUs 842.

Any component in computing device 802 can communicate with any other component according to function, although not all connections are shown for ease of illustration. For instance, as shown in FIG. 8, bus 806 is a multiple signal line communication medium (e.g., conductive traces in silicon, metal traces along a motherboard, wires, etc.) present to communicatively couple processor 810 to various other components of computing device 802, although in other embodiments, an alternative bus, further buses, and/or one or more individual signal lines is/are present to communicatively couple components. Bus 806 represents one or more of any of several types of bus structures, including a memory bus or memory controller, a peripheral bus, an accelerated graphics port, and a processor or local bus using any of a variety of bus architectures.

Storage 820 is physical storage that includes one or both of memory 856 and storage device 888, which store operating system 812, application programs 814, and application data 816 according to any distribution. Non-removable memory 822 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 822 includes main memory and is separate from or fabricated in a same integrated circuit as processor 810. As shown in FIG. 8, non-removable memory 822 stores firmware 818 that is present to provide low-level control of hardware. Examples of firmware 818 include BIOS (Basic Input/Output System, such as on personal computers) and boot firmware (e.g., on smart phones). In examples, removable memory 824 is inserted into a receptacle of or is otherwise coupled to computing device 802 and can be removed by a user from computing device 802. Removable memory 824 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 888 are present that are internal and/or external to a housing of computing device 802 and are or are not removable. Examples of storage device 888 include a hard disk drive, a SSD, a thumb drive (e.g., a USB (Universal Serial Bus) flash drive), or other physical storage device.

One or more programs are stored in storage 820. Such programs include operating system 812, one or more application programs 814, and other program modules and program data. Examples of such application programs include computer program logic (e.g., computer program code/instructions) for implementing threat discoverer 104, network database 106, action handler 108, related network identifier determiner 202, graph generator 204, cluster determiner 206, cluster filter 208, threat determiner 210, and/or each of the components described therein, as well as any of flowcharts 300, 400, 500, 600, 700, and/or any individual steps thereof.

Storage 820 also stores data used and/or generated by operating system 812 and application programs 814 as application data 816. Examples of application data 816 include web pages, text, images, tables, sound files, video data, and other data. In examples, application data 816 is sent to and/or received from one or more network servers or other devices via one or more wired or wireless networks. Storage 820 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 802 through one or more input devices 830 and receives information from computing device 802 through one or more output devices 850. Input device(s) 830 includes one or more of touch screen 832, microphone 834, camera 836, physical keyboard 838 and/or trackball 840 and output device(s) 850 includes one or more of speaker 852 and display 854. Each of input device(s) 830 and output device(s) 850 are integral to computing device 802 (e.g., built into a housing of computing device 802) or are external to computing device 802 (e.g., communicatively coupled wired or wirelessly to computing device 802 via wired interface(s) 880 and/or wireless modem(s) 860). Further input devices 830 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 854 displays information, as well as operating as touch screen 832 by receiving user commands and/or other information (e.g., by touch, finger gestures, virtual keyboard, etc.) as a user interface. Any number of each type of input device(s) 830 and output device(s) 850 are present, including multiple microphones 834, multiple cameras 836, multiple speakers 852, and/or multiple displays 854.

In embodiments where GPU 842 is present, GPU 842 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 842 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 844 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 828. In an example, NPU 844 is configured for a data-driven parallel computing and is highly efficient at processing massive multimedia data such as videos and images and processing data for neural networks. NPU 844 is configured for efficient handling of AI-related tasks, such as speech recognition, background blurring in video calls, photo or video editing processes like object detection, etc.

In embodiments disclosed herein that implement ML models, NPU 844 can be utilized to execute such ML models, of which MLM 828 is an example. For instance, where applicable, MLM 828 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 844 is used to train MLM 828. To train MLM 828, training data that includes input features (attributes) and their corresponding output labels/target values (e.g., for supervised learning) is collected. A training algorithm is a computational procedure that is used so that MLM 828 learns from the training data. Parameters/weights are internal settings of MLM 828 that are adjusted during training by the training algorithm to reduce a difference between predictions by MLM 828 and actual outcomes (e.g., output labels). In some examples, MLM 828 is set with initial values for the parameters/weights. A loss function measures a dissimilarity between predictions by MLM 828 and the target values, and the parameters/weights of MLM 828 are adjusted to minimize the loss function. The parameters/weights are iteratively adjusted by an optimization technique, such as gradient descent. In this manner, MLM 828 is generated through training by NPU 844 to be used to generate inferences based on received input feature sets for particular applications. MLM 828 is generated as a computer program or other type of algorithm configured to generate an output (e.g., a classification, a prediction/inference) based on received input features, and is stored in the form of a file or other data structure.

In examples, such training of MLM 828 by NPU 844 is supervised or unsupervised. According to supervised learning, input objects (e.g., a vector of predictor variables) and a desired output value (e.g., a human-labeled supervisory signal) train MLM 828. The training data is processed, building a function that maps new data on expected output values. Example algorithms usable by NPU 844 to perform supervised training of MLM 828 in particular implementations include support-vector machines, linear regression, logistic regression, Naïve Bayes, linear discriminant analysis, decision trees, K-nearest neighbor algorithm, neural networks, and similarity learning.

In an example of supervised learning where MLM 828 is an LLM, MLM 828 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 828 is trained to learn patterns from unlabeled data. For instance, in embodiments where MLM 828 implements unsupervised learning techniques, MLM 828 identifies one or more classifications or clusters to which an input belongs. During a training phase of MLM 828 according to unsupervised learning, MLM 828 tries to mimic the provided training data and uses the error in its mimicked output to correct itself (i.e., correct weights and biases). In further examples, NPU 844 perform unsupervised training of MLM 828 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 844 need not necessarily be present in all ML model embodiments. In embodiments where ML models are present, any one or more of processor 810, GPU 842, and/or NPU 844 can be present to train and/or execute MLM 828.

One or more wireless modems 860 can be coupled to antenna(s) (not shown) of computing device 802 and can support two-way communications between processor 810 and devices external to computing device 802 through network 804, as would be understood to persons skilled in the relevant art(s). Wireless modem 860 is shown generically and can include a cellular modem 866 for communicating with one or more cellular networks, such as a GSM network for data and voice communications within a single cellular network, between cellular networks, or between the mobile device and a public switched telephone network (PSTN). In examples, wireless modem 860 also or alternatively includes other radio-based modem types, such as a Bluetooth modem 864 (also referred to as a "Bluetooth device") and/or Wi-Fi modem 862 (also referred to as an "wireless adaptor"). Wi-Fi modem 862 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 864 is configured to communicate with another Bluetooth-capable device according to the Bluetooth short-range wireless technology standard(s) such as IEEE 802.15.1 and/or managed by the Bluetooth Special Interest Group (SIG).

Computing device 802 can further include power supply 882, LI receiver 884, accelerometer 886, and/or one or more wired interfaces 880. Example wired interfaces 880 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 880 of computing device 802 provide for wired connections between computing device 802 and network 804, or between computing device 802 and one or more devices/peripherals when such devices/peripherals are external to computing device 802 (e.g., a pointing device, display 854, speaker 852, camera 836, physical keyboard 838, etc.). Power supply 882 is configured to supply power to each of the components of computing device 802 and receives power from a battery internal to computing device 802, and/or from a power cord plugged into a power port of computing device 802 (e.g., a USB port, an A/C power port). LI receiver 884 is useable for location determination of computing device 802 and in examples includes a satellite navigation receiver such as a Global Positioning System (GPS) receiver and/or includes other type of location determiner configured to determine location of computing device 802 based on received information (e.g., using cell tower triangulation, etc.). Accelerometer 886, when present, is configured to determine an orientation of computing device 802.

Note that the illustrated components of computing device 802 are not required or all-inclusive, and fewer or greater numbers of components can be present as would be recognized by one skilled in the art. In examples, computing device 802 includes one or more of a gyroscope, barometer, proximity sensor, ambient light sensor, digital compass, etc. In an example, processor 810 and memory 856 are co-located in a same semiconductor device package, such as being included together in an integrated circuit chip, FPGA, or system-on-chip (SOC), optionally along with further components of computing device 802.

In embodiments, computing device 802 is configured to implement any of the above-described features of flowcharts herein. Computer program logic for performing any of the operations, steps, and/or functions described herein is stored in storage 820 and executed by processor 810.

In some embodiments, server infrastructure 870 is present in computing environment 800 and is communicatively coupled with computing device 802 via network 804. Server infrastructure 870, when present, is a network-accessible server set (e.g., a cloud-based environment or platform). As shown in FIG. 8, server infrastructure 870 includes clusters 872. Each of clusters 872 comprises a group of one or more compute nodes and/or a group of one or more storage nodes. For example, as shown in FIG. 8, cluster 872 includes nodes 874. Each of nodes 874 are accessible via network 804 (e.g., in a "cloud-based" embodiment) to build, deploy, and manage applications and services. In examples, any of nodes 874 is a storage node that comprises a plurality of physical storage disks, SSDs, and/or other physical storage devices that are accessible via network 804 and are configured to store data associated with the applications and services managed by nodes 874.

Each of nodes 874, as a compute node, comprises one or more server computers, server systems, and/or computing devices. For instance, a node 874 in accordance with an embodiment includes one or more of the components of computing device 802 disclosed herein. Each of nodes 874 is configured to execute one or more software applications (or "applications") and/or services and/or manage hardware resources (e.g., processors, memory, etc.), which are utilized by users (e.g., customers) of the network-accessible server set. In examples, as shown in FIG. 8, nodes 874 includes a node 846 that includes storage 848 and/or one or more of a processor 858 (e.g., similar to processor 810, GPU 842, and/or NPU 844 of computing device 802). Storage 848 stores application programs 876 and application data 878. Processor(s) 858 operate application programs 876 which access and/or generate related application data 878. In an implementation, nodes such as node 846 of nodes 874 operate or comprise one or more virtual machines, with each virtual machine emulating a system architecture (e.g., an operating system), in an isolated manner, upon which applications such as application programs 876 are executed.

In embodiments, one or more of clusters 872 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 872 are included in a datacenter in a distributed collection of datacenters. In embodiments, exemplary computing environment 800 comprises part of a cloud-based platform.

In an embodiment, computing device 802 accesses application programs 876 for execution in any manner, such as by a client application and/or a browser at computing device 802.

In an example, for purposes of network (e.g., cloud) backup and data security, computing device 802 additionally and/or alternatively synchronizes copies of application programs 814 and/or application data 816 to be stored at network-based server infrastructure 870 as application programs 876 and/or application data 878. In examples, operating system 812 and/or application programs 814 include a file hosting service client configured to synchronize applications and/or data stored in storage 820 at network-based server infrastructure 870.

In some embodiments, on-premises servers 892 are present in computing environment 800 and are communicatively coupled with computing device 802 via network 804. On-premises servers 892, when present, are hosted within an organization's infrastructure and, in many cases, physically onsite of a facility of that organization. On-premises servers 892 are controlled, administered, and maintained by IT (Information Technology) personnel of the organization or an IT partner to the organization. Application data 898 can be shared by on-premises servers 892 between computing devices of the organization, including computing device 802 (when part of an organization) through a local network of the organization, and/or through further networks accessible to the organization (including the Internet). Furthermore, in examples, on-premises servers 892 serve applications such as application programs 896 to the computing devices of the organization, including computing device 802. Accordingly, in examples, on-premises servers 892 include storage 894 (which includes one or more physical storage devices such as storage disks and/or SSDs) for storage of application programs 896 and application data 898 and include a processor 890 (e.g., similar to processor 810, GPU 842, and/or NPU 844 of computing device 802) for execution of application programs 896. In some embodiments, multiple processors 890 are present for execution of application programs 896 and/or for other purposes. In further examples, computing device 802 is configured to synchronize copies of application programs 814 and/or application data 816 for backup storage at on-premises servers 892 as application programs 896 and/or application data 898.

Embodiments described herein may be implemented in one or more of computing device 802, network-based server infrastructure 870, and on-premises servers 892. For example, in some embodiments, computing device 802 is used to implement systems, clients, or devices, or components/subcomponents thereof, disclosed elsewhere herein. In other embodiments, a combination of computing device 802, network-based server infrastructure 870, and/or on-premises servers 892 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 820. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 814) are stored in storage 820. Such computer programs can also be received via wired interface(s) 860 and/or wireless modem(s) 860 over network 804. Such computer programs, when executed or loaded by an application, enable computing device 802 to implement features of embodiments discussed herein. Accordingly, such computer programs represent controllers of the computing device 802.

Embodiments are also directed to computer program products comprising computer code or instructions stored on any computer-readable medium or computer-readable storage medium. Such computer program products include the physical storage of storage 820 as well as further physical storage types.

### IV. Additional Example Embodiments

In embodiments, a system comprises: a processor; a memory device comprising program code executable to cause the processor to: receive an input network identifier associated with a first attribute value; determine a related network identifier sharing at least the first attribute value; generate a graph comprising at least a first node corresponding to the input network identifier, a second node corresponding to the related network identifier, and a first edge connecting the first node and the second node; determine that the graph satisfies a risk condition, the risk condition based on a proportion of nodes in the graph corresponding to any network identifier marked as suspicious; determine a node cluster in the graph; determine a filtered cluster comprising any node, in the node cluster, sharing the same attribute value for at least a predetermined proportion of at least one compared attribute value with any node, in the node cluster, corresponding to any network identifier marked as suspicious, the filtered cluster comprising an unmarked node corresponding to a first network identifier not marked as suspicious and a marked node corresponding to a second network identifier marked as suspicious; determine a threat score for the unmarked node, the threat score determined based at least on a first distance between the unmarked node and the marked node; determine that the threat score satisfies a predetermined score threshold; mark the first network identifier as suspicious; and cause a responsive action to be performed, the responsive action caused based on the first network identifier that is marked as suspicious.

In embodiments, to determine the related network identifier, the program code is executed to cause the processor to: determine that the first attribute value is associated with fewer than a predetermined number of network identifiers; and determine that the related network identifier is associated with the first attribute value that is associated with fewer than the predetermined number of network identifiers.

In embodiments, to generate the graph, the program code is executed to cause the processor to: determine a weight for the first edge, the weight determined based at least on the first attribute value.

In embodiments, to determine the node cluster in the graph, the program code is executed to cause the processor to: determine a second distance between the first node and the second node, the second distance determined based on a weight associated with a first edge; and determine the cluster based at least on the second distance.

In embodiments, to cause the responsive action to be performed, the program code is executed to cause the processor to perform at least one of: block network traffic associated with the first network identifier; analyze network traffic associated with the first network identifier; or generate an alert associated with the first network identifier.

In embodiments, to determine the threat score, the program code is executed to cause the processor to: determine a number of nodes corresponding to any network identifier marked as suspicious that are connected to the unmarked node.

In embodiments, the input network identifier comprises at least one of: an Internet protocol (IP) address; a hostname; or a domain name.

In embodiments, a method comprises: receiving an input network identifier associated with a first attribute value; determining a related network identifier sharing at least the first attribute value; generating a graph comprising at least a first node corresponding to the input network identifier, a second node corresponding to the related network identifier, and a first edge connecting the first node and the second node; determining that the graph satisfies a risk condition, the risk condition based on a proportion of nodes in the graph corresponding to any network identifier marked as suspicious; determining a node cluster in the graph; determining a filtered cluster comprising any node, in the node cluster, sharing the same attribute value for at least a predetermined proportion of at least one compared attribute value with any node, in the node cluster, corresponding to any network identifier marked as suspicious, the filtered cluster comprising an unmarked node corresponding to a first network identifier not marked as suspicious and a marked node corresponding to a second network identifier marked as suspicious; determining a threat score for the unmarked node, the threat score determined based at least on a first distance between the unmarked node and the marked node; determining that the threat score satisfies a predetermined score threshold; marking the first network identifier as suspicious; and causing a responsive action to be performed, the responsive action caused based on the first network identifier that is marked as suspicious.

In embodiments, determining the related network identifier comprises: determining that the first attribute value is associated with fewer than a predetermined number of network identifiers; and determining that the related network identifier is associated with the first attribute value that is associated with fewer than the predetermined number of network identifiers.

In embodiments, generating the graph comprises: determining a weight for the first edge, the weight determined based at least on the first attribute value.

In embodiments, determining the node cluster in the graph comprises: determining a second distance between the first node and the second node, the second distance determined based on a weight associated with a first edge; and determining the cluster based at least on the second distance.

In embodiments, the responsive action comprises at least one of: blocking network traffic associated with the first network identifier; analyzing network traffic associated with the first network identifier; or generating an alert associated with the first network identifier.

In embodiments, determining the threat score comprises: determining a number of nodes corresponding to any network identifier marked as suspicious that are connected to the unmarked node.

In embodiments, the input network identifier comprises at least one of: an Internet protocol (IP) address; a hostname; or a domain name.

In embodiments, a computer-readable storage medium comprises executable instructions that are executable by a processor to cause the processor to: receive an input network identifier associated with a first attribute value; determine a related network identifier sharing at least the first attribute value; generate a graph comprising at least a first node corresponding to the input network identifier, a second node corresponding to the related network identifier, and a first edge connecting the first node and the second node; determine that the graph satisfies a risk condition, the risk condition based on a proportion of nodes in the graph corresponding to any network identifier marked as suspicious; determine a node cluster in the graph; determine a filtered cluster comprising any node, in the node cluster, sharing the same attribute value for at least a predetermined proportion of at least one compared attribute value with any node, in the node cluster, corresponding to any network identifier marked as suspicious, the filtered cluster comprising an unmarked node corresponding to a first network identifier not marked as suspicious and a marked node corresponding to a second network identifier marked as suspicious; determine a threat score for the unmarked node, the threat score determined based at least on a first distance between the unmarked node and the marked node; determine that the threat score satisfies a predetermined score threshold; mark the first network identifier as suspicious; and cause a responsive action to be performed, the responsive action caused based on the first network identifier that is marked as suspicious.

In embodiments, to determine the related network identifier, the executable instructions are executable to cause the processor to: determine that the first attribute value is associated with fewer than a predetermined number of network identifiers; and determine that the related network identifier is associated with the first attribute value that is associated with fewer than the predetermined number of network identifiers.

In embodiments, to generate the graph, the executable instructions are executable to cause the processor to: determine a weight for the first edge, the weight determined based at least on the first attribute value.

In embodiments, to determine the node cluster in the graph, the executable instructions are executable to cause the processor to: determine a second distance between the first node and the second node, the second distance determined based on a weight associated with a first edge; and determine the cluster based at least on the second distance.

In embodiments, to cause the responsive action to be performed, the executable instructions are executable to cause the processor to perform at least one of: block network traffic associated with the first network identifier; analyze network traffic associated with the first network identifier; or generate an alert associated with the first network identifier.

In embodiments, to determine the threat score, the executable instructions are executable to cause the processor to: determine a number of nodes corresponding to any network identifier marked as suspicious that are connected to the unmarked node.

### V. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of the embodiment for an application for which it is intended. Furthermore, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

While various embodiments of the present disclosure have been described above, it should be understood that they have been presented by way of example only, and not limitation. It will be understood by those skilled in the relevant art(s) that various changes in form and details may be made therein without departing from the spirit and scope of the invention as defined in the appended claims. Accordingly, the breadth and scope of the present invention should not be limited by any of the above-described exemplary embodiments, but should be defined only in accordance with the following claims and their equivalents.

## Claims

1. A system (100, 200, 800) comprising:
a processor (810, 842, 844, 858, 890);
a memory device (820, 848, 894) comprising program code (814, 876, 896) executable to cause the processor (810, 842, 844, 858, 890) to:
receive (302) an input network identifier (110) associated with a first attribute value;
determine (304) a related network identifier (212) sharing at least the first attribute value;
generate (306) a graph (214) comprising at least a first node corresponding to the input network identifier (110), a second node corresponding to the related network identifier (212), and a first edge connecting the first node and the second node;
determine (308) that the graph (214) satisfies a risk condition, the risk condition based on a proportion of nodes in the graph corresponding to any network identifier marked as suspicious;
determine (310) a node cluster (216) in the graph (214);
determine (312) a filtered cluster (218) comprising any node, in the node cluster, sharing the same attribute value for at least a predetermined proportion of at least one compared attribute value with any node, in the node cluster, corresponding to any network identifier marked as suspicious, the filtered cluster comprising an unmarked node corresponding to a first network identifier not marked as suspicious and a marked node corresponding to a second network identifier marked as suspicious;
determine (314) a threat score for the unmarked node, the threat score determined based at least on a first distance between the unmarked node and the marked node;
determine (316) that the threat score satisfies a predetermined score threshold;
mark (318) the first network identifier as suspicious; and
cause (320) a responsive action to be performed, the responsive action caused based on the first network identifier that is marked as suspicious.

2. The system of claim 1, wherein, to determine the related network identifier, the program code is executed to cause the processor to:
determine that the first attribute value is associated with fewer than a predetermined number of network identifiers; and
determine that the related network identifier is associated with the first attribute value that is associated with fewer than the predetermined number of network identifiers.

3. The system of claim 1, wherein, to generate the graph, the program code is executed to cause the processor to:
determine a weight for the first edge, the weight determined based at least on the first attribute value.

4. The system of claim 1, wherein, to determine the node cluster in the graph, the program code is executed to cause the processor to:
determine a second distance between the first node and the second node, the second distance determined based on a weight associated with a first edge; and
determine the cluster based at least on the second distance.

5. The system of claim 1, wherein, to cause the responsive action to be performed, the program code is executed to cause the processor to perform at least one of:
block network traffic associated with the first network identifier;
analyze network traffic associated with the first network identifier; or
generate an alert associated with the first network identifier.

6. The system of claim 1, wherein, to determine the threat score, the program code is executed to cause the processor to:
determine a number of nodes corresponding to any network identifier marked as suspicious that are connected to the unmarked node.

7. The system of claim 1, wherein the input network identifier comprises at least one of:
an Internet protocol (IP) address;
a hostname; or
a domain name.

8. A method (300) comprising:
receiving (302) an input network identifier (110) associated with a first attribute value;
determining (304) a related network identifier (212) sharing at least the first attribute value;
generating (306) a graph (214) comprising at least a first node corresponding to the input network identifier (110), a second node corresponding to the related network identifier (212), and a first edge connecting the first node and the second node;
determining (308) that the graph (214) satisfies a risk condition, the risk condition based on a proportion of nodes in the graph corresponding to any network identifier marked as suspicious;
determining (310) a node cluster (216) in the graph (214);
determining (312) a filtered cluster (218) comprising any node, in the node cluster, sharing the same attribute value for at least a predetermined proportion of at least one compared attribute value with any node, in the node cluster, corresponding to any network identifier marked as suspicious, the filtered cluster comprising an unmarked node corresponding to a first network identifier not marked as suspicious and a marked node corresponding to a second network identifier marked as suspicious;
determining (314) a threat score for the unmarked node, the threat score determined based at least on a first distance between the unmarked node and the marked node;
determining (316) that the threat score satisfies a predetermined score threshold;
marking (318) the first network identifier as suspicious; and
causing (320) a responsive action to be performed, the responsive action caused based on the first network identifier that is marked as suspicious.

9. The method of claim 8, wherein said determining the related network identifier comprises:
determining that the first attribute value is associated with fewer than a predetermined number of network identifiers; and
determining that the related network identifier is associated with the first attribute value that is associated with fewer than the predetermined number of network identifiers.

10. The method of claim 8, wherein said generating the graph comprises:
determining a weight for the first edge, the weight determined based at least on the first attribute value.

11. The method of claim 8, wherein said determining the node cluster in the graph comprises:
determining a second distance between the first node and the second node, the second distance determined based on a weight associated with a first edge; and
determining the cluster based at least on the second distance.

12. The method of claim 8, wherein the responsive action comprises at least one of:
blocking network traffic associated with the first network identifier;
analyzing network traffic associated with the first network identifier; or
generating an alert associated with the first network identifier.

13. The method of claim 8, wherein said determining the threat score comprises:
determining a number of nodes corresponding to any network identifier marked as suspicious that are connected to the unmarked node.

14. The method of claim 8, wherein the input network identifier comprises at least one of:
an Internet protocol (IP) address;
a hostname; or
a domain name.

15. A computer-readable storage medium (820, 848, 894) comprising executable instructions (814, 876, 896) that are executable by a processor (810, 842, 844, 858, 890) to cause the processor (810, 842, 844, 858, 890) to:
receive (302) an input network identifier (110) associated with a first attribute value;
determine (304) a related network identifier (212) sharing at least the first attribute value;
generate (306) a graph (214) comprising at least a first node corresponding to the input network identifier (110), a second node corresponding to the related network identifier (212), and a first edge connecting the first node and the second node;
determine (308) that the graph (214) satisfies a risk condition, the risk condition based on a proportion of nodes in the graph corresponding to any network identifier marked as suspicious;
determine (310) a node cluster (216) in the graph (214);
determine (312) a filtered cluster (218) comprising any node, in the node cluster, sharing the same attribute value for at least a predetermined proportion of at least one compared attribute value with any node, in the node cluster, corresponding to any network identifier marked as suspicious, the filtered cluster comprising an unmarked node corresponding to a first network identifier not marked as suspicious and a marked node corresponding to a second network identifier marked as suspicious;
determine (314) a threat score for the unmarked node, the threat score determined based at least on a first distance between the unmarked node and the marked node;
determine (316) that the threat score satisfies a predetermined score threshold;
mark (318) the first network identifier as suspicious; and
cause (320) a responsive action to be performed, the responsive action caused based on the first network identifier that is marked as suspicious.
